# FASCICULE DE BREVET EUROPEEN

(11) **EP 3 035 027 B1**
(45) Date de publication et mention de la délivrance du brevet: **17.04.2019**
(21) Numéro de dépôt: 15199740.0
(22) Date de dépôt: 14.12.2015
(51) Int. Cl.: G01N 3/10

(54) **DISPOSITIF POUR ESSAI DE FLUAGE EN AUTOCLAVE**
VORRICHTUNG FÜR KRIECHTEST IN EINEM AUTOKLAV
CREEP TEST DEVICE FOR AUTOCLAVE

(30) Priorité: 15.12.2014 FR 1462436
(43) Date de publication de la demande: 22.06.2016
(73) Titulaire: Commissariat à l'Énergie Atomique et aux Énergies Alternatives, 75015 Paris (FR)
(72) Inventeur: DATCHARRY, Frédéric, 78190 Trappes (FR)
(74) Mandataire: Brevalex

(56) Documents cités:
- FR-A1- 3 001 542
- GB-A- 1 115 709
- JP-A- 2004 101 520
- US-A- 4 107 982

## Description

### DOMAINE TECHNIQUE

L'invention concerne un dispositif d'essai de fluage d'une éprouvette mécanique baignant dans une atmosphère pouvant être chauffée et pressurisée, le fluage étant un phénomène de déformation irréversible d'un matériau qui est soumis à une contrainte constante inférieure à la limite élastique pendant une durée suffisamment longue.

### ÉTAT DE LA TECHNIQUE ANTÉRIEURE

D'une manière générale, un essai de fluage consiste à soumettre une éprouvette mécanique à un effort constant de traction, voire de compression, pendant une durée importante pour mesurer la variation de longueur de cette éprouvette au fil du temps. La durée d'un essai de fluage peut être de l'ordre de 8000 heures ou plus, c'est-à-dire environ une année ou plus, du fait que le phénomène de fluage en soi est lent.

Pour reproduire les conditions d'exploitation du matériau que l'on veut tester, il peut être nécessaire que l'éprouvette baigne dans une atmosphère gazeuse ou liquide prédéterminée devant être maintenue à une certaine température pendant toute la durée de l'essai, et éventuellement pressurisée.

A cet effet, un tel essai est réalisé avec un appareillage électrique comprenant d'une part des moyens pour mettre l'éprouvette sous charge mécanique, et d'autre part un autoclave dans lequel est installée l'éprouvette afin de maintenir une atmosphère réchauffée et éventuellement pressurisée dans l'environnement de cette éprouvette (voir p.e. FR-A1-3 001 542).

Il s'ensuit qu'une coupure de courant survenant temporairement pendant l'essai peut compromettre la validité d'un tel essai, du fait qu'elle provoque une baisse de température sans décharger mécaniquement l'éprouvette. En effet, une diminution de la température de l'environnement de l'éprouvette provoque la rétractation des composants portant cette éprouvette, et par là même un accroissement de la charge subie par l'éprouvette pendant la coupure.

Cette particularité est d'autant plus problématique que l'échec d'un essai implique de réaliser un nouvel essai de fluage, ce qui retarde d'un an ou plus la disponibilité des résultats.

Le but de l'invention est de proposer une architecture d'appareillage d'essai de fluage permettant remédier à cet inconvénient.

### EXPOSÉ DE L'INVENTION

A cet effet, l'invention a pour objet un dispositif pour essai de fluage dans un milieu contrôlé en température et en pression, comprenant :
- une platine destinée à constituer un couvercle de fermeture d'un autoclave, cette platine comprenant une face interne destinée à être vers l'intérieur de l'autoclave et une face externe destinée à être hors de l'autoclave ;
- une structure portée par la face interne de la platine et agencée pour recevoir une éprouvette, cette structure portant un organe de préhension d'une extrémité de cette éprouvette ;
- un actionneur hydraulique porté par la face externe pour exercer un effort de traction et/ou de compression sur l'éprouvette, cet actionneur hydraulique comprenant une partie mobile ayant une tige traversant de manière étanche la platine et portant à son extrémité un autre moyen de préhension pour l'autre extrémité d'éprouvette ;
- une source hydraulique pressurisée pour alimenter l'actionneur hydraulique ;
- au moins une électrovanne de dépressurisation qui est normalement ouverte lorsqu'elle n'est pas alimentée électriquement et qui est agencée pour dépressuriser l'actionneur hydraulique lorsqu'elle est ouverte.

Avec cette architecture, en cas de coupure d'alimentation électrique, l'actionneur hydraulique est automatiquement dépressurisé, ce qui décharge mécaniquement l'éprouvette pour éviter qu'elle ne soit soumise à une surcharge susceptible d'invalider l'essai.

L'invention a également pour objet un dispositif ainsi défini, comprenant un circuit hydraulique reliant la source hydraulique à l'actionneur par un premier conduit et un second conduit distincts l'un de l'autre, cet actionneur hydraulique étant du type vérin à double effet comprenant une première chambre reliée au premier conduit et une seconde chambre reliée au second conduit, le premier conduit étant équipé d'une première électrovanne de dépressurisation, le second conduit étant équipé d'une seconde électrovanne de dépressurisation.

L'invention a également pour objet un dispositif ainsi défini, dans lequel le premier conduit est équipé d'une première vanne d'alimentation pouvant être soit ouverte soit fermée pour respectivement mettre en communication la source hydraulique avec la première chambre ou les isoler l'un de l'autre, et dans lequel le second conduit est équipé d'une seconde vanne d'alimentation pouvant être soit ouverte soit fermée pour respectivement mettre en communication la source hydraulique avec la première chambre ou les isoler l'un de l'autre.

### EXPOSÉ DÉTAILLÉ DE MODES DE RÉALISATION PARTICULIERS

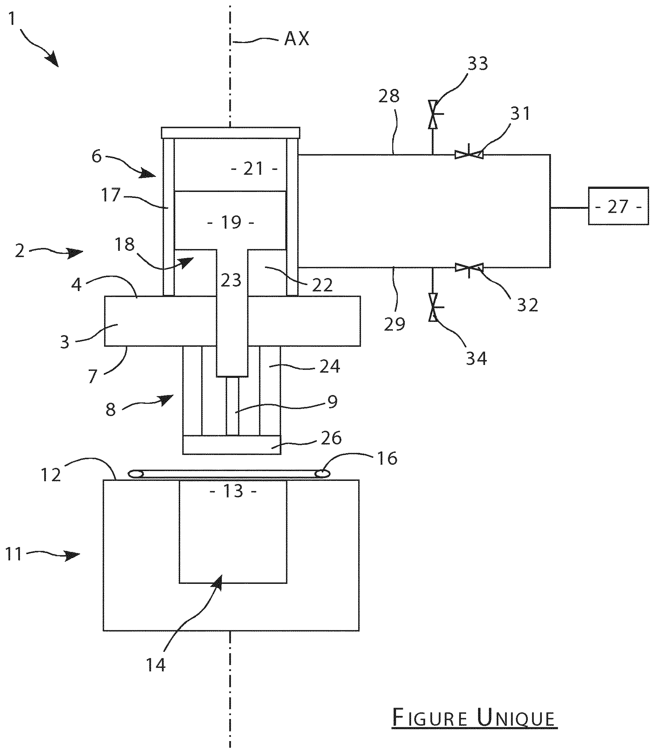

Comme visible dans la figure unique, le dispositif d'essai de fluage selon l'invention qui est repéré par 1 comporte un ensemble supérieur 2 incluant une platine 3 formant support, qui porte à sa face supérieure 4 un actionneur hydraulique 6, et à sa face inférieure 7 une structure 8 destinée à recevoir une éprouvette 9.

Cet ensemble supérieur 2 est destiné à venir coiffer un autoclave 11 comportant une face supérieure 12 pourvue d'une ouverture 13 qui est fermée par la platine 3 formant couvercle. La face supérieure 4 de la platine 3 constitue ainsi sa face externe alors que sa face inférieure 7 constitue sa face interne du fait qu'elle est située du côté intérieur de l'autoclave lorsque l'ensemble est en service.

Ainsi, lorsque l'ensemble supérieur 1 est en place sur l'autoclave 11, la platine 3 est en appui sur la face supérieure 12 pour fermer l'ouverture 13. La structure 8 dans laquelle est installée l'éprouvette 9 est située sensiblement au centre de l'enceinte interne 14 que délimite l'autoclave 11.

Comme visible dans la figure unique, un joint circulaire 16 entourant l'ouverture 13 est avantageusement interposé entre la face inférieure 7 de la platine 3 et la face supérieure 12 de l'autoclave afin d'assurer la meilleure étanchéité entre ces éléments. Quoi qu'il en soit, le couvercle que constitue la partie haute peut ainsi être retiré de l'autoclave 11 à tout moment.

L'actionneur hydraulique 6 a une structure générale correspondant à celle d'un vérin à double effet. Il comprend une paroi extérieure 17, par exemple cylindrique, délimitant une enveloppe à l'intérieur de laquelle coulisse un équipage 18 qui est mobile selon une direction principale AX, ici verticale qui est normale au plan de la face inférieure 7 de la platine 3. Cet équipage mobile comporte un piston 19 séparant l'enveloppe en une première chambre 21 et une seconde chambre 22, et une tige 23 rigidement solidarisée au piston 19 et traversant de manière étanche la platine 3.

La structure 8 comporte des montants 24 orientés parallèlement à l'axe AX, qui dépassent de la face inférieure 7, et qui portent à leur extrémité libre une embase 26 s'étendant parallèlement à la face 7 tout en étant distante de cette face.

L'une des extrémités de l'éprouvette 9 est fixée à un moyen de préhension non représenté que porte la région centrale de l'embase 26, et son autre extrémité est fixée à un autre moyen de préhension que porte l'extrémité libre de la tige 23.

L'actionneur hydraulique 6 est relié à une source de pression 27 par un premier conduit 28 reliant sa première chambre 21 à cette source pressurisée 27, et par un second conduit 29 reliant sa seconde chambre 22 à la source 27.

Le premier conduit 28 comporte une première vanne ou électrovanne d'alimentation 31 pouvant être ouverte pour mettre en pression la première chambre 21 soit fermée pour la maintenir à sa pression courante. Le second conduit 29 est lui aussi équipé d'une seconde vanne ou électrovanne 32 pouvant être soit ouverte pour mettre en pression la seconde chambre 22 soit fermée pour la maintenir à sa pression courante. Ces électrovannes d'alimentation sont l'une et l'autre du type normalement fermées, c'est-à-dire qu'elles sont fermées dès lors qu'elles ne sont pas alimentées électriquement.

Complémentairement, une dérivation équipée à son extrémité libre d'une première électrovanne de dépressurisation 33 est connectée au premier conduit, entre la vanne d'alimentation 31 et la première chambre 21. Cette première vanne de dépressurisation 33 permet ainsi de dépressuriser la première chambre 21 en commandant son ouverture. Il s'agit d'une électrovanne normalement ouverte, c'est-à-dire qui s'ouvre dès qu'elle n'est pas alimentée électriquement.

De la même manière, une seconde dérivation équipée à son extrémité libre d'une seconde vanne de dépressurisation 34 est connectée au second conduit entre la vanne d'alimentation 32 et la seconde chambre 22. Cette seconde vanne de dépressurisation 34 permet ainsi de dépressuriser la seconde chambre 22 lorsqu'elle est commandée en ouverture. Il s'agit là aussi d'une électrovanne normalement ouverte, c'est-à-dire qui s'ouvre dès lors qu'elle n'est pas alimentée électriquement.

En situation de service, l'éprouvette 9 est d'abord installée dans la structure 8 en fixant l'une de ses extrémités au moyen de préhension non représenté que porte la platine 26 et en fixant son autre extrémité au moyen de préhension non représenté que porte l'extrémité de la tige 23.

L'ensemble supérieur 1 est alors installé sur l'autoclave 11 pour que la platine 3 constitue un couvercle fermant l'enceinte interne 14 que délimite cet autoclave. Selon la configuration choisie, l'ensemble supérieur peut aussi être fixe, auquel cas l'autoclave 11 est alors rapporté et fixé à la face inférieure 7.

Dans cette situation de service, la structure 8 est en place dans la région centrale de l'enceinte intérieure 14 de l'autoclave qui est fermé par le couvercle 3. L'autoclave peut alors être rempli du fluide approprié qui doit baigner l'éprouvette conformément aux spécifications de l'essai, et ce fluide est régulé ou contrôlé en température et éventuellement en pression par un système externe non représenté. Cette régulation en température réchauffe le fluide pour le maintenir à une haute température, c'est-à-dire une supérieure à la température ambiante.

A ce stade, les électrovannes de dépressurisation 33 et 34 peuvent être alimentées électriquement pour se fermer. S'il s'agit d'un essai de fluage en compression alors la vanne 31 est pilotée en ouverture jusqu'à atteindre dans la première chambre 21 la pression nécessaire pour obtenir l'effort de compression souhaité, et elle est fermée lorsque cette pression est atteinte.

En cas d'essai de traction, c'est au contraire la vanne d'alimentation 32 qui est ouverte pour mettre en pression la seconde chambre 22, puis fermée lorsque l'effort de traction souhaité est atteint.

Complémentairement, l'actionneur peut être équipé d'un dispositif de mesure de la position de son organe mobile 18, permettant de réaliser de façon automatisée des relevés permettant de consigner l'évolution de cette position tout au long de l'essai de fluage.

Par ailleurs, les électrovannes d'alimentation et de dépressurisation peuvent aussi être pilotées par une unité de commande qui les commande de manière à maintenir dans la chambre de l'actionneur qui est utilisée, une pression de consigne correspondant à l'effort nécessaire pour mener l'essai. Ces électrovannes sont avantageusement du type proportionnelles, et le système est alors aussi avantageusement équipé de capteurs de mesure de la pression dans le premier conduit et dans le second conduit, de manière à mettre en oeuvre un asservissement.

En cas de coupure de l'alimentation électrique du système, les vannes de dépressurisation 28 et 29 s'ouvrent automatiquement du fait qu'il s'agit de vannes normalement ouvertes et les vannes d'alimentation 31 et 32 se ferment automatiquement du fait qu'il s'agit de vannes normalement fermées. Ceci provoque la dépressurisation des deux chambres 21 et 22, et par là même la décharge de l'éprouvette qui n'est ainsi plus contrainte mécaniquement. Parallèlement, la température du fluide dans lequel baigne l'éprouvette décroît et le cas échéant, sa pression décroît aussi.

Une coupure d'alimentation électrique de l'appareillage provoque ainsi automatiquement la décharge de l'éprouvette pour qu'elle ne soit plus sollicitée mécaniquement, ce qui correspond à une pause de l'essai ne remettant pas en cause sa validité.

Lorsque l'alimentation électrique est rétablie, un opérateur, ou bien un système automatisé de gestion actionne les vannes ou électrovannes pour rétablir la pression appropriée dans la chambre de l'actionneur hydraulique. L'éprouvette est alors à nouveau chargée mécaniquement pour poursuivre l'essai, le fluide présent dans l'autoclave étant lui aussi à nouveau régulé en température et éventuellement en pression.

## Revendications

1. Dispositif (1) pour essai de fluage dans un milieu contrôlé en température et en pression, comprenant :
- une platine (3) destinée à constituer un couvercle de fermeture d'un autoclave (11), cette platine (3) comprenant une face interne (7) destinée à être vers l'intérieur (14) de l'autoclave (11) et une face externe (4) destinée à être hors de l'autoclave (11) ;
- une structure (8) portée par la face interne (7) de la platine (3) et agencée pour recevoir une éprouvette (9), cette structure portant un organe de préhension d'une extrémité de cette éprouvette (9) ;
- un actionneur hydraulique (6) porté par la face externe (4) pour exercer un effort de traction et/ou de compression sur l'éprouvette (9), cet actionneur hydraulique (6) comprenant une partie mobile (18) ayant une tige (23) traversant de manière étanche la platine (3) et portant à son extrémité un autre moyen de préhension pour l'autre extrémité d'éprouvette ;
**caractérisé en ce qu'**il comporte aussi :
- une source hydraulique pressurisée (27) pour alimenter l'actionneur hydraulique (6) par l'intermédiaire d'au moins un conduit (28, 29) ;
- une électrovanne d'alimentation (31, 32) équipant chaque conduit pour mettre en communication la source hydraulique (27) avec l'actionneur ou les isoler l'un de l'autre
- une électrovanne de dépressurisation (33, 34) connectée à chaque conduit, chaque électrovanne de dépressurisation (33, 34) étant normalement ouverte lorsqu'elle n'est pas alimentée électriquement et étant agencée pour dépressuriser l'actionneur hydraulique (6) lorsqu'elle est ouverte.

2. Dispositif selon la revendication 1, comprenant une dérivation connectée à chaque conduit d'alimentation (31, 32), chaque dérivation comportant une extrémité libre et étant équipée d'une électrovanne de dépressurisation (33, 34).

3. Dispositif selon la revendication 1 ou 2, comprenant un circuit hydraulique reliant la source hydraulique (27) à l'actionneur (6) par un premier conduit (28) et un second conduit (29) distincts l'un de l'autre, cet actionneur hydraulique (6) étant du type vérin à double effet comprenant une première chambre (21) reliée au premier conduit (28) et une seconde chambre (22) reliée au second conduit, le premier conduit (28) étant équipé d'une première électrovanne de dépressurisation (33), le second conduit étant équipé d'une seconde électrovanne de dépressurisation (34).

4. Dispositif selon la revendication 3, dans lequel le premier conduit (28) est équipé d'une première vanne d'alimentation (31) pouvant être soit ouverte soit fermée pour respectivement mettre en communication la source hydraulique (27) avec la première chambre (21) ou les isoler l'un de l'autre, et dans lequel le second conduit (29) est équipé d'une seconde vanne d'alimentation (32) pouvant être soit ouverte soit fermée pour respectivement mettre en communication la source hydraulique (27) avec la première chambre (21) ou les isoler l'un de l'autre.

## Patentansprüche

1. Vorrichtung (1) für einen Kriechversuch in einer hinsichtlich Temperatur und Druck kontrollierten Umgebung, umfassend:
- eine Platte (3), die dazu bestimmt ist, einen Verschlussdeckel eines Autoklaven (11) zu bilden, wobei die Platte (3) eine Innenseite (7) umfasst, die dazu bestimmt ist, zum Inneren (14) des Autoklaven (11) gewandt zu sein, und eine Außenseite (4) umfasst, die dazu bestimmt ist, sich außerhalb des Autoklaven (11) zu befinden;
- eine von der Innenseite (7) der Platte (3) getragene Struktur (8), die zur Aufnahme eines Teststücks (9) angeordnet ist, wobei die Struktur ein Greifelement für ein Ende des Teststücks (9) trägt;
- ein von der Außenseite (4) getragenes hydraulisches Stellglied (6), um eine Zug- oder/und Druckkraft auf das Teststück (9) auszuüben, wobei das hydraulische Stellglied (6) ein bewegliches Teil (18) mit einer Stange (23) aufweist, welche die Platte (3) in dichter Weise durchquert und an ihrem Ende ein weiteres Greifmittel für das andere Ende des Teststücks trägt;
**dadurch gekennzeichnet, dass** sie weiter umfasst:
- eine druckbeaufschlagte Hydraulikquelle (27) zum Versorgen des hydraulischen Stellglieds (6) vermittels wenigstens einer Leitung (28, 29);
- für jede Leitung ein elektromagnetisches Zufuhrventil (31, 32), mit welchem die Leitung ausgestattet ist, um die Hydraulikquelle (27) mit dem Stellglied in Verbindung zu bringen oder sie voneinander zu isolieren,
- für jede Leitung ein mit der Leitung verbundenes elektromagnetisches Druckentlastungsventil (33, 34), wobei jedes elektromagnetische Druckentlastungsventil (33, 34) normalerweise geöffnet ist, wenn es nicht elektrisch versorgt wird, und angeordnet ist, um dann, wenn es geöffnet ist, das hydraulische Stellglied (6) zu druckentlasten.

2. Vorrichtung nach Anspruch 1, umfassend für jede Versorgungsleitung eine Ableitung, die mit der Versorgungsleitung (31, 32) verbunden ist, wobei jede Ableitung ein freies Ende umfasst und mit einem elektromagnetischen Druckentlastungsventil (33, 34) ausgestattet ist.

3. Vorrichtung nach Anspruch 1 oder 2, umfassend einen Hydraulikkreis, der die Hydraulikquelle (27) mit dem Stellglied (6) durch eine erste Leitung (28) und eine zweite Leitung (29) verbindet, die voneinander verschieden sind, wobei das hydraulische Stellglied (6) vom Typ doppeltwirkender Zylinder ist, mit einer ersten Kammer (21), die mit der ersten Leitung (28) verbunden ist, und mit einer zweiten Kammer (22), die mit der zweiten Leitung verbunden ist, wobei die erste Leitung (28) mit einem ersten elektromagnetischen Druckentlastungsventil (33) ausgestattet ist, wobei die zweite Leitung mit einem zweiten elektromagnetischen Druckentlastungsventil (34) ausgestattet ist.

4. Vorrichtung nach Anspruch 3, wobei die erste Leitung (28) mit einem ersten Zufuhrventil (31) ausgestattet ist, das entweder geöffnet oder geschlossen sein kann, um jeweils die Hydraulikquelle (27) mit der ersten Kammer (21) in Verbindung zu bringen oder sie voneinander zu isolieren, und wobei die zweite Leitung (29) mit einem zweiten Zufuhrventil (32) ausgestattet ist, das entweder geöffnet oder geschlossen sein kann, um jeweils die Hydraulikquelle (27) mit der ersten Kammer (21) in Verbindung zu bringen oder sie voneinander zu isolieren.

## Claims

1. A device (1) for creep test in a temperature and pressure controlled medium, comprising:
- a plate (3) intended to constitute a lid for closing an autoclave (11), this plate (3) comprising an inner face (7) intended to be towards the inside (14) of the autoclave (11) and an outer face (4) intended to be out of the autoclave (11);
- a structure (8) carried by the inner face (7) of the plate (3) and arranged to receive a test tube (9), this structure carrying a gripping member of an end of this test tube (9);
- a hydraulic actuator (6) carried by the outer face (4) for exerting a tensile and/or compressive force on the test tube (9), this hydraulic actuator (6) comprising a movable part (18) having a rod (23) sealingly passing through the plate (3) and carrying at its end another gripping means for the other test tube end;
**characterized in that** it also includes:
- a pressurized hydraulic source (27) for supplying the hydraulic actuator (6) via at least one duct (28, 29) ;
- a supply solenoid valve (31, 32) fitted to each duct for putting in communication the hydraulic source (27) with the actuator or isolating them from one another
- a depressurization solenoid valve (33, 34) connected to each duct, each depressurization solenoid valve (33, 34) being normally open when it is not electrically powered and being arranged to depressurize the hydraulic actuator (6) when it is open.

2. The device according to claim 1, comprising a bypass connected to each supply conduit (31, 32), each bypass including a free end and being equipped with a depressurization solenoid valve (33, 34).

3. The device according to claim 1 or 2, comprising a hydraulic circuit connecting the hydraulic source (27) to the actuator (6) by a first duct (28) and a second duct (29) separate from each other, this hydraulic actuator (6) being of the double-acting cylinder type comprising a first chamber (21) connected to the first duct (28) and a second chamber (22) connected to the second duct, the first duct (28) being equipped with a first depressurization solenoid valve (33), the second duct being equipped with a second depressurization solenoid valve (34).

4. The device according to claim 3, wherein the first duct (28) is equipped with a first supply valve (31) which can be either open or closed to respectively put in communication the hydraulic source (27) with the first chamber (21) or to isolate them from one another, and wherein the second duct (29) is equipped with a second supply valve (32) that can be either open or closed to respectively put in communication the hydraulic source (27) with the first chamber (21) or to isolate them from one another.
